# EUROPÄISCHE PATENTANMELDUNG

(11) **EP 4 186 673 A1**
(43) Veröffentlichungstag der Anmeldung: **31.05.2023**
(21) Anmeldenummer: 21210893.0
(22) Anmeldetag: 26.11.2021
(51) Int. Cl.: B29C 45/14, B29L 31/00

(54) **FLÄCHENKÖRPER, INSBESONDERE GROSSVOLUMIGER HOHLKÖRPER**

(71) Anmelder: Etimex Technical Components GmbH, 89616 Rottenacker (DE)
(72) Erfinder: Boden, Axel, 89584 Ehingen (DE); Holstein, Klaus, 88471 Laupheim (DE)
(74) Vertreter: Rothkopf, Ferdinand

(57) **Zusammenfassung**

Die Erfindung betrifft ein Verfahren zum Herstellen eines Flächenkörpers aus Kunststoff, mit den Schritten: Bereitstellen eines ersten Flächenbauteils und eines zweiten Flächenbauteils nebeneinander an einem Nahtbereich und Verbinden der beiden Flächenbauteile an dem Nahtbereich. Dabei wird zum Verbinden ein Stützbauteil an dem Nahtbereich bereitgestellt und am Nahtbereich eine sich an dem Stützbauteil abstützende, die beiden Flächenbauteile miteinander verbindende Umspritzung ausgebildet.

## Beschreibung

Die Erfindung betrifft ein Verfahren zum Herstellen eines Flächenkörpers aus Kunststoff, mit den Schritten: Bereitstellen eines ersten Flächenbauteils und eines zweiten Flächenbauteils nebeneinander an einem Nahtbereich und Verbinden der beiden Flächenbauteile an dem Nahtbereich. Ferner betrifft die Erfindung einen Flächenkörper aus Kunststoff, insbesondere in der Form eines Hohlkörpers, der mit einem solchen Verfahren hergestellt.

Unter Flächenkörper werden vorliegend Körper verstanden, die mit ihrer Körperform bzw. räumlichen Erstreckung zumindest eine Fläche überspannen, so wie insbesondere plattenförmige Körper, schalenförmige Körper, rohrförmige Körper, becherförmige Körper oder tankförmige Körper. Flächenbauteile bilden dabei Abschnitte dieser Flächenkörper, insbesondere an deren Außenfläche.

Es sind allgemein diverse Verfahren zum Herstellen solcher Flächenkörper bekannt, wobei oftmals mehrere Flächenbauteile an zumindest einem Nahtbereich miteinander zu verbinden sind. Damit können insbesondere großräumige Flächenkörper aus mehreren Bauteilen einfacher hergestellt werden. So ist es z.B. zum Herstellen von großvolumigen Kunststoff-Hohlkörpern allgemein bekannt, Kunststoffflächenbauteile miteinander zu verschweißen.

### Zugrundeliegende Aufgabe

Der Erfindung liegt die Aufgabe zugrunde, ein Verfahren zum Herstellen eines Flächenkörpers aus Kunststoff zu schaffen, mittels dem insbesondere besonders großflächige und besonders bevorzugt großvolumige Flächenkörper kostengünstig und zugleich formstabil herzustellen sind.

### Erfindungsgemäße Lösung

Diese Aufgabe ist erfindungsgemäß mit einem Verfahren zum Herstellen eines Flächenkörpers aus Kunststoff gelöst, mit den Schritten: Bereitstellen eines ersten Flächenbauteils und eines zweiten Flächenbauteils nebeneinander an einem Nahtbereich und Verbinden der beiden Flächenbauteile an dem Nahtbereich. Dabei wird erfindungsgemäß zum Verbinden ein Stützbauteil an dem Nahtbereich bereitgestellt und am Nahtbereich eine sich an dem Stützbauteil abstützende, die beiden Flächenbauteile miteinander verbindende Umspritzung ausgebildet.

Die Erfindung ist ferner auf einen Flächenkörper aus Kunststoff, insbesondere in der Form eines Hohlkörpers, gerichtet, der mit einem solchen, erfindungsgemäßen Verfahren hergestellt ist. Der Hohlkörper ist vorzugsweise ein Gastank, insbesondere ein Wasserstofftank. Bevorzugt weist der Hohlkörper zumindest über einen Großteil einer Längserstreckung eine kreiszylindrische Außenform auf, vorzugsweise mit einem Durchmesser von größer 0,50 m, besonders bevorzugt von größer 0,80 m.

Erfindungsgemäß wird zum Verbinden zweier Flächenbauteile aus Kunststoff eine Umspritzung vorgesehen, wobei diese Umspritzung an einem dazu separat bereitgestellten Stützbauteil abgestützt wird. Das Stützbauteil stellt also ein Bauteil dar, dem eine besondere Stützfunktion während des Vorgangs des Umspritzens zukommt. Ferner kann das Stützbauteil auch nach Fertigstellung der Umspritzung an dem Flächenkörper eine gewisse Stützwirkung für die beteiligten Flächenbauteile schaffen.

Bei dem derartigen erfindungsgemäßen Verfahren wird vorzugsweise zumindest eines der Flächenbauteile in Form eines Hohlkörpers bereitgestellt. Unter Hohlkörper wird dabei ein Bauteil verstanden, das teilweise, das weitestgehend oder das ganz geschlossen ist, vorzugsweise derart, dass es einen Hohlraum, ein Volumen bzw. eine Kavität umschließt, also insbesondere ein Rohr bzw. Hohlzylinder, ein Becher bzw. eine Tonne oder ein Tank bzw. ein Gehäuse. Für derartige Bauteile ist das erfindungsgemäße Verfahren besonders von Vorteil. Solche Bauteile weisen nämlich stets an einem Umfang eine Wandung auf, die mittels des erfindungsgemäßen Stützbauteils besonders vorteilhaft und insbesondere während des Umspritzens zu stabilisieren ist.

Das mindestens eine Flächenbauteil wird besonders bevorzugt mittels Spritzgießen bereitgestellt. Mittels Spritzgießen können geringe Maßtoleranzen eingehalten werden. Zugleich können in Kombination mit dem erfindungsgemäßen Verfahren die beteiligten Flächenbauteile vergleichsweise klein gehalten werden, so dass zugehörige Spritzgießformen noch vergleichsweise kostengünstig hergestellt und betrieben werden können. Alternativ kann für die Flächenbauteile auch ein Blasformen verwendet werden. Mit solchem Blasformen können insbesondere becherförmige Bauteile, welche einen Rohrabschnitt und einen Kappenabschnitt in sich vereinen, vorteilhaft hergestellt werden. Ferner kann alternativ mit einem Extrudieren für alle oder einzelne Flächenbauteile gearbeitet werden, wobei mittels Extrudieren insbesondere rohrförmige Flächenbauteile vorteilhaft herzustellen sind.

Vorzugsweise wird ferner das Stützbauteil in Form eines Ringes bereitgestellt. Ein derart ringförmiges Stützbauteil kann an seinem Ringumfang vergleichsweise hohe Stützkräfte aufnehmen. Der Ring weist dabei in der Draufsicht betrachtet vorzugsweise im Wesentlichen die Form eines Kreises, einer Ellipse, einer Raute, eines Quadrats oder eines Rechtecks auf. Somit lassen sich insbesondere diverse Hohlkörper und besonders bevorzugt Tanks mit diversen Volumenformen herstellen.

An dem Stützbauteil wird erfindungsgemäß vorteilhaft ein Haltemittel zum Rückhalten des mindestens einen Flächenbauteils an dem Stützbauteil vorgesehen. Mit dem Haltemittel lässt sich eine Kopplung zwischen Stützbauteil und Flächenbauteil bilden, die das Flächenbauteil insbesondere ortsfest an dem Stützbauteil hält. Das Haltemittel ist vorzugsweise eine Schnappverbindung zwischen dem mindestens einen Flächenbauteil und dem Stützbauteil. Mit einer solchen Verbindung können die beiden Bauteile, insbesondere auch auf Zug in Position gehalten werden. Bei dem Vorgang des erfindungsgemäßen Umspritzens ist das Flächenbauteil dann relativ zum Stützbauteil ortsfest und dauerhaft positioniert, so dass die Umspritzung mit der gewünschten Präzision und Stabilität ausgebildet werden kann. Alternativ oder zusätzlich zu einem Haltemittel kann diese Haltefunktion zwischen Stützbauteil und Flächenbauteilen auch von einem Haltemittel am Flächenbauteil, einem externen Haltemittel und/oder einem Haltemittel an der für das Umspritzen verwendeten Spritzgussform bereitgestellt werden.

Ferner wird gemäß einer Weiterbildung der Erfindung vorteilhaft die Umspritzung an das Stützbauteil lösbar gekoppelt. Damit kann das Stützbauteil nach dem Umspritzen von der Umspritzung abgelöst werden. Dies ist von Vorteil, wenn das Stützbauteil nach dem Umspritzen vollständig von der Anordnung entfernt werden soll oder wenn das Stützbauteil zumindest kräftemäßig weitgehend unabhängig von der Umspritzung sein soll, beispielsweise frei von Spannungen aufgrund thermischer Einflüsse. Eine solche Vorgehensweise wird daher gewählt, wenn das Stützbauteil von der Anordnung aus mindestens einem Flächenbauteil und Umspritzung abnehmbar bzw. entnehmbar sein soll. Alternativ kann zwischen dem Stützbauteil und der Umspritzung auch ein Stoffschluss oder ein Formschluss hergestellt werden, derart, dass diese Teile fest miteinander verbunden sind.

An dem Stützbauteil wird ferner bevorzugt mindestens ein Funktionselement ausgebildet. Mit einem solchen Funktionselement kann das Stützbauteil eine Mehrfachfunktionalität übernehmen. Vorteilhaft wirkt dieses Funktionselement als Abstützung, insbesondere in Form eines, Steges, einer Speiche, eines Lagers oder einer Nabe. Eine solche Abstützung ist insbesondere von Vorteil, wenn an dem mindestens einen Flächenbauteil weitere Bearbeitungsschritte folgen, wie insbesondere ein Umwickeln des Flächenbauteils zur weiteren Stabilisierung, wie es bevorzugt bei einem Tank mit Innendruck vorgesehen wird.

Das Stützbauteil wird vorzugsweise aus einem Kunststoffmaterial bereitgestellt. Ein solches Stützbauteil kann kostengünstig und mit hoher Formvariabilität hergestellt werden. Alternativ ist das Stützbauteil vorteilhaft aus einem Nicht-Kunststoffmaterial, insbesondere Metall herzustellen, um besonders hohe Stützkräfte aufnehmen zu können.

Ferner wird vorzugsweise das Stützbauteil mit mindestens einem Abstandssteg zum Anlegen des ersten und zweiten Flächenbauteils bereitgestellt. Der mindestens eine Abstandssteg erstreckt sich vorzugsweise in radialer Richtung an einem ringförmigen Stützbauteil und schafft damit einen definierten Abstand in axialer Richtung zwischen zwei benachbarten Flächenbauteilen. In den Leerraum von diesem definierten Abstand hinein wird dann die erfindungsgemäße Umspritzung ausgebildet, wobei der mindestens eine Abstandssteg von dem eingespritzten Material umspült und damit in die Umspritzung eingebettet wird. Damit werden die beiden Flächenbauteile mittels der Umspritzung insbesondere dicht und/oder kraftübertragend gekoppelt. Mit dem mindestens einen Abstandsteg kann das zugehörige Stützbauteil besonders einfach an ein zugehöriges Flächenbauteil angesetzt und dort gehaltert werden, was insbesondere ein Handling dieser Teileanordnung vereinfacht und verbessert.

Vorteilhaft ist ferner an dem erfindungsgemäßen Stützbauteil an einem zum benachbarten Flächenbauteil zeigenden Rand ein Dichtabschnitt gebildet, mittels dem das Stützbauteil während der Umspritzung gegen das Flächenbauteil abgedichtet ist. An dem Dichtabschnitt ist dann ein definiertes Ende für die Umspritzung festgelegt. Die derartige Dichtwirkung kann alternativ von einem Spritzgusswerkzeug für das Ausbilden der Umspritzung erzeugt werden. Ferner ist vorzugsweise an jener zu dem mindestens einen Flächenbauteil weisenden Seite des Stützbauteils eine Vertiefung, insbesondere eine Nut ausgebildet, in die hinein die erfindungsgemäße Umspritzung auszubilden ist. Die Umspritzung kann damit eine gewisse Mindestdicke erhalten, mittels der die erfindungsgemäß erwünschte, kraftaufnehmende, insbesondere von Zugkraft, und vorteilhaft fluiddichte Kopplung von Flächenbauteilen möglich ist. Das erfindungsgemäße Stützbauteil, insbesondere der Stützring, hat ferner vorzugsweise gegenüber dem benachbarten, mindestens einen Flächenbauteil ein gewisses Übermaß. Mit dem Übermaß wird eine Klemmpressung zwischen Stützbauteil und Flächenbauteil geschaffen, welche die oben genannte Haltewirkung und Dichtwirkung zwischen diesen Bauteilen verbessert.

Die für das erfindungsgemäße Umspritzen vorgesehene Spritzgussform bzw. das dafür vorgesehene Spritzgießwerkzeug ist vorteilhaft mehrteilig. Dies bedeutet, dass die Spritzgussform mehrere Formabschnitte aufweist, die einzeln außen und aufeinanderfolgend, insbesondere entlang der auszubildenden Umspritzung angeordnet sind und so eine auch vergleichsweise lange und vorzugsweise auch umlaufende Umspritzungsnaht vergleichsweise einfach herstellbar ist.

Schließlich bezieht sich die Erfindung auch auf Flächenkörper aus Kunststoff, insbesondere in der Form eines Hohlkörpers, hergestellt mit dem oben genannten erfindungsgemäßen Verfahren. Mit anderen Worten bezieht sich die Erfindung also auch auf eine Verwendung des oben genannten Verfahrens zum Herstellen eines Flächenkörpers aus Kunststoff, insbesondere in der Form eines Hohlkörpers, wie im besonderen eines Gastanks, vorzugsweise eines Wasserstofftanks.

### Kurzbeschreibung der Zeichnungen

Nachfolgend werden Ausführungsbeispiele einer erfindungsgemäßen Lösung anhand der beigefügten schematischen Zeichnungen näher erläutert. Es zeigt:
- Fig. 1: einen Längsschnitt eines ersten Ausführungsbeispiels eines erfindungsgemäß herzustellenden Flächenkörpers mit dessen erstem und zweitem Flächenbauteil sowie mit einer ersten Variante eines Stützbauteils,
- Fig. 2: eine perspektivische Ansicht des ersten und zweiten Flächenbauteils gemäß Fig. 1,
- Fig. 3: eine perspektivische Ansicht des Stützbauteils gemäß Fig. 1,
- Fig. 4: eine perspektivische, vergrößerte und nur teilweise Ansicht des ersten Flächenbauteils, vormontiert am Stützbauteil gemäß Fig. 1,
- Fig. 5: das Stützbauteil gemäß Fig. 1 in vergrößerter Ansicht,
- Fig. 6: die Ansicht gemäß Fig. 5 von unten betrachtet,
- Fig. 7: den Längsschnitt gemäß Fig. 1 mit einer daran ausgebildeten Umspritzung in vollständiger Ansicht,
- Fig. 8: eine perspektivische Ansicht einer zweiten Variante eines Stützbauteils und
- Fig. 9: einen Längsschnitt eines zweiten Ausführungsbeispiels eines erfindungsgemäß herzustellenden Flächenkörpers mit dessen erstem, zweitem und drittem Flächenbauteil, mit zwei Stützbauteilen gemäß Fig. 8 und mit bereits einer daran ausgebildeten Umspritzung.

### Detaillierte Beschreibung der Ausführungsbeispiele

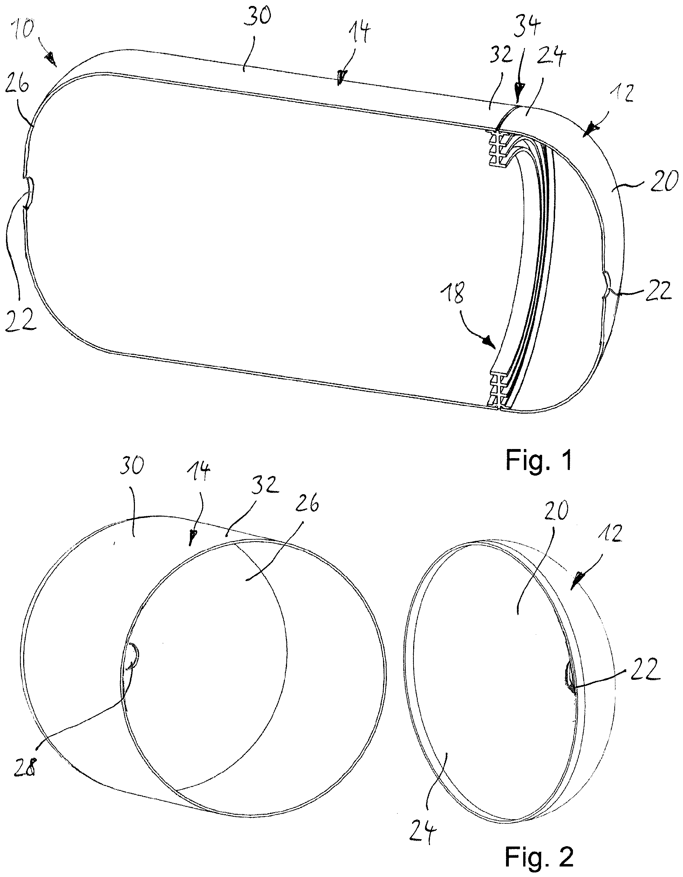

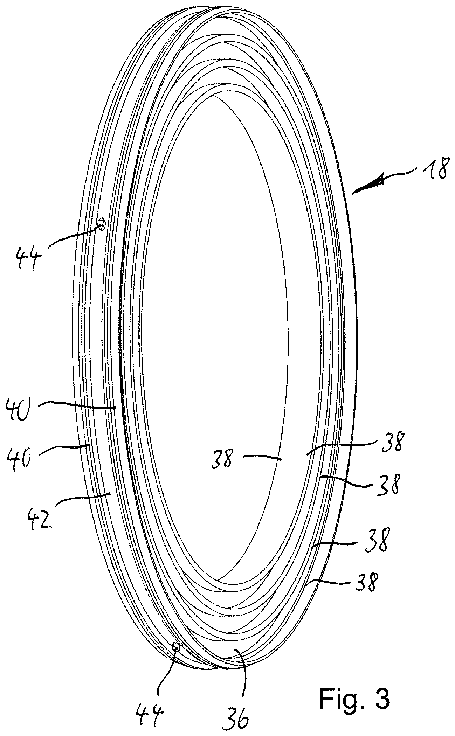

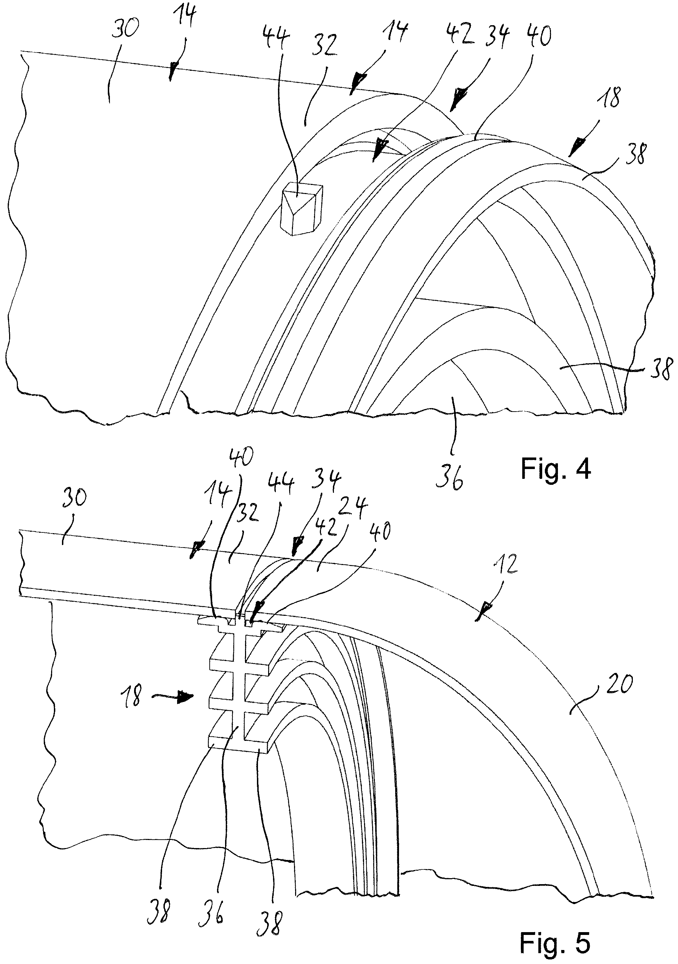

In den Fig. 1 bis 7 ist ein erstes Ausführungsbeispiel eines als Wasserstofftank zu verwendenden Flächenkörpers 10 dargestellt. Der Flächenkörper 10 ist dabei zum Speichern von Wasserstoff in Gasform bei einem Druck von bis zu ca. 700 bar vorgesehen. Er ist aus einem deckelförmigen bzw. kappenförmigen ersten Flächenbauteil 12 sowie einem becherförmigen bzw. tonnenförmigen, zweiten Flächenbauteil 14 gebildet, die mittels einer Umspritzung 16 miteinander fluiddicht verbunden sind. Die Umspritzung 16 ist dabei innenseitig von einem Stützbauteil 18 in Form eines Stützrings abgestützt.

Das deckelförmige, erste Flächenbauteil 12 ist mittels Spritzgießen von Kunststoff mit einem im Wesentlichen in radialer Richtung scheibenförmigen, ersten Bodenabschnitt 20 gebildet, in dessen Zentrum eine erste Anschlussöffnung 22 ausgebildet ist. An den ersten Bodenabschnitt 20 schließt sich umlaufend und in axialer Richtung ein kreiszylindrischer, erster Randabschnitt 24 an. Das becherförmig, zweite Flächenbauteil 14 ist ebenfalls mittels Spritzgießen von Kunststoff mit einem im Wesentlichen in radialer Richtung scheibenförmigen, zweiten Bodenabschnitt 26 gebildet, in dessen Zentrum eine zweite Anschlussöffnung 28 ausgebildet ist. An den zweiten Bodenabschnitt 26 schließt sich umlaufend und in axialer Richtung ein kreiszylindrischer Wandungsabschnitt 30 an, der in einen zweiten Randabschnitt 32 übergeht. Die beiden derartigen Randbereiche 24 und 32 grenzen an einem ebenfalls umlaufenden Nahtbereich 34 aneinander.

Das Stützbauteil 18 ist als weiteres Spritzgussteil aus Kunststoff mit einem Radialsteg 36 gebildet, von dem in radialer Richtung in regelmäßigen Abständen verteilt beidseitig je mehrere Axialstege 38 abstehen. An den radial äußeren beiden Axialstegen 38 ist an deren Endbereich jeweils in der Form eines umlaufenden Dichtwulstes ein nach außen hin wirksamer Dichtabschnitt 40 gebildet. Zwischen diesen beiden derart in axialer Richtung beabstandeten Dichtabschnitten 40 befindet sich eine nach radial innen zurückgesetzte, umlaufende Nut 42 mit einer im Wesentlichen rechteckigen Querschnittsfläche. In dieser Nut 42 sind am Umfang in regelmäßigen Abständen verteilt radial nach außen abstehende Abstandsstege 44 in der Form von Dornen bzw. Noppen ausgebildet. Gegen diese Abstandsstege 44 sind an deren axialen Seiten das erste Flächenbauteil 12 mit seinem ersten Randabschnitt 24 und das zweite Flächenbauteil 14 mit seinem zweiten Randabschnitt 32 angelegt und auf diese Weise sind die Flächenbauteile 12 und 14 mit definiertem Abstand an dem Stützbauteil 18 gehalten.

Die Dichtabschnitte 40 bilden dabei eine Klemmung zwischen dem Stützbauteil 18 und dem ersten Flächenbauteil 12 bzw. zweiten Flächenbauteil 14. Dieses Haltern der beiden Flächenbauteile 12 und 14 an dem Stützbauteil 18 ist ferner dadurch gesichert, dass an den beiden radial äußeren Axialstegen 38 des Stützbauteils 18 an deren Umfang in regelmäßigen Abständen verteilt mehrere axial abstehende Haltemittel 46 in der Form von U-förmigen Rasthaken vorgesehen sind. Diese Rasthaken wirken formschlüssig und insbesondere manuell fixierbar mit Rastnasen 48 zusammen, die entsprechend örtlich passend an den Innenseiten der Randabschnitte 24 und 32 der beiden Flächenbauteile 12 bzw. 14 vorgesehen sind.

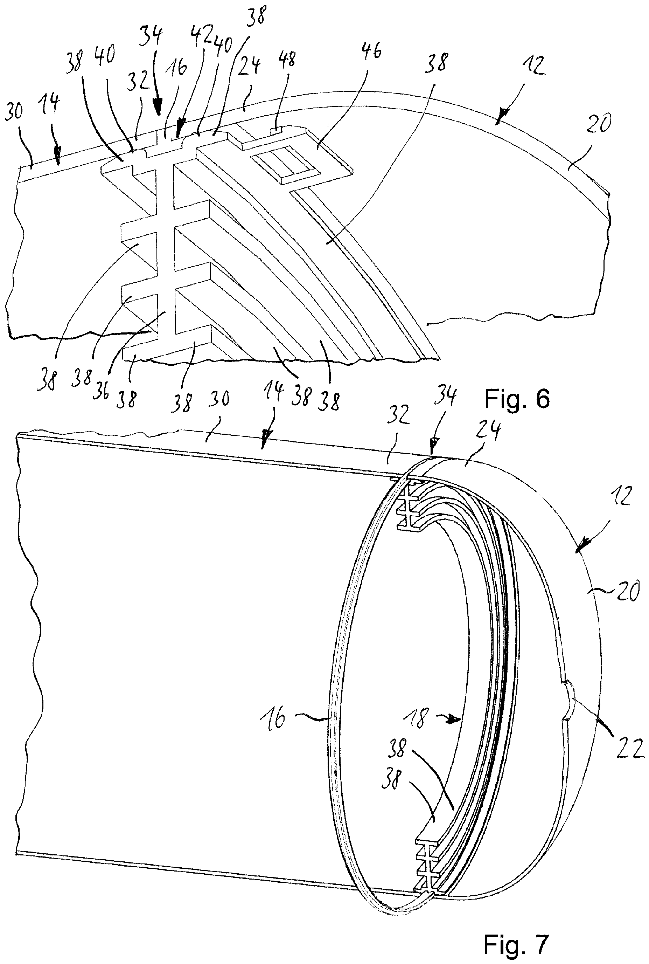

In die Nut 42 ist mittels eines weiteren Spritzvorgangs die Umspritzung 16 mit Kunststoffmaterial eingefügt (siehe insbesondere die Fig. 6 und 7), womit eine stoffschlüssige und insbesondere auch fluiddichte Verbindung zwischen dem ersten Randabschnitt 24 des ersten Flächenbauteils 12 sowie dem zweiten Randabschnitt 32 des zweiten Flächenbauteils 14 hergestellt wird. Das Material der Umspritzung 16 kann ferner stoffschlüssig an das Stützbauteil 18 koppeln oder aber einen losen Kontakt mit dem Stützbauteil 18 herstellen, insbesondere indem ein Trennmittel in der Nut 42 eingebracht ist.

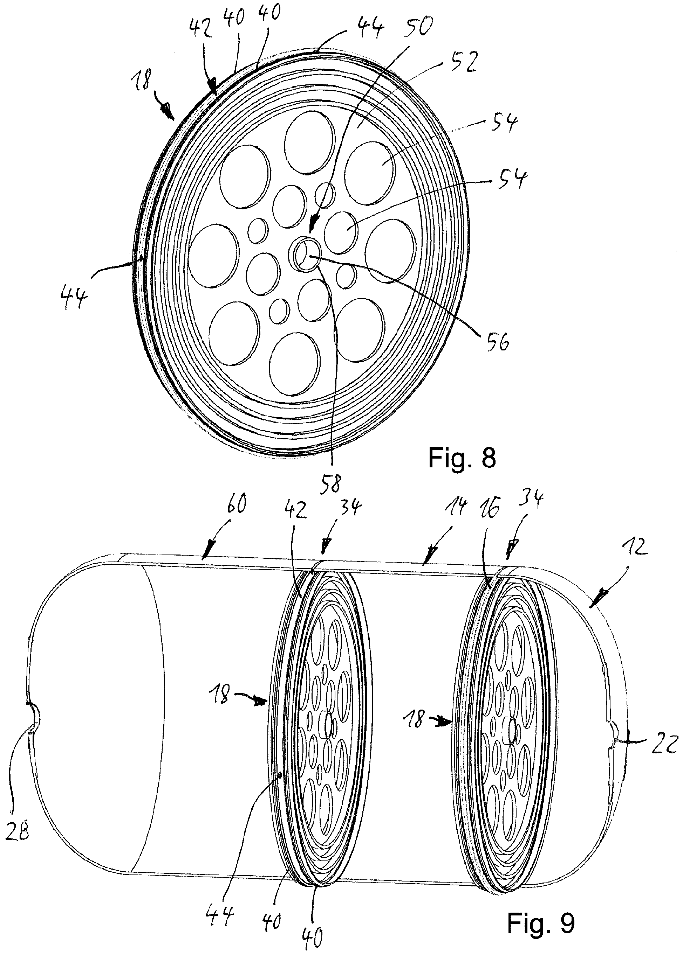

Mit den Fig. 8 und 9 ist eine Variante eines Stützbauteils 18 dargestellt, das an seiner Ringform ebenfalls die oben genannten Komponenten Radialsteg 36, Axialstege 38, Dichtungsabschnitte 40, Nut 42 und Abstandsstege 44 aufweist. Das Innere der Ringform des Stützbauteils 18 gemäß Fig. 8 und 9 weist jedoch ein Funktionselement 50 in Gestalt einer Nabe auf, die als eine die Ringform radial überspannende Scheibe 52 mit darin ausgebildeten Aussparungsöffnungen 54 vorgesehen ist. Die Nabe ist ferner mittels einer zentralen Nabenöffnung 56 in der Scheibe 52 und axial daran abstehenden hohlzylindrischen Nabenstegen 58 gebildet.

Der zugehörige Flächenkörper 10 gemäß den Fig. 8 und 9 weist zwei solche Stützbauteile 18 auf, die zwischen einem ersten, kappenförmigen Flächenbauteil 12, einem zweiten, rohrförmigen Flächenbauteil 14 sowie einem dritten, becherförmigen Flächenbauteil 60 vorgesehen sind. Die Funktionselemente 50 bilden dabei insbesondere zusammen mit Anschlussöffnungen 22 und 28 im ersten Flächenbauteil 12 sowie im dritten Flächenbauteil 60 eine zentrale Achse, an der der derart hergestellte Flächenkörper 10 insbesondere drehbar gehalten werden kann. Ein solches Halten auf einer zentralen Achse ist vorteilhaft, um den Flächenkörper 10 nachfolgend weiter bearbeiten und insbesondere mit einem hochfesten Material, wie etwa einem Gewebe, umwickeln zu können.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Flächenkörper
- 12: erstes Flächenbauteil
- 14: zweites Flächenbauteil
- 16: Umspritzung
- 18: Stützbauteil
- 20: Bodenabschnitt
- 22: Anschlussöffnung
- 24: Randabschnitt
- 26: Bodenabschnitt
- 28: Anschlussöffnung
- 30: Wandungsabschnitt
- 32: Randabschnitt
- 34: Nahtbereich
- 36: Radialsteg
- 38: Axialsteg
- 40: Dichtabschnitt
- 42: Nut
- 44: Abstandssteg
- 46: Haltemittel
- 48: Rastnase
- 50: Funktionselement
- 52: Scheibe
- 54: Aussparungsöffnung
- 56: Nabenöffnung
- 58: Nabensteg
- 60: drittes Flächenbauteil

## Patentansprüche

1. Verfahren zum Herstellen eines Flächenkörpers (10) aus Kunststoff, mit den Schritten:
- Bereitstellen eines ersten Flächenbauteils (12) und eines zweiten Flächenbauteils (14) nebeneinander an einem Nahtbereich (34) und
- Verbinden der beiden Flächenbauteile (12, 14) an dem Nahtbereich (34), **dadurch gekennzeichnet, dass** zum Verbinden ein Stützbauteil (18) an dem Nahtbereich (34) bereitgestellt und am Nahtbereich eine sich an dem Stützbauteil (18) abstützende, die beiden Flächenbauteile (12, 14) miteinander verbindende Umspritzung (16) ausgebildet wird.

2. Verfahren nach Anspruch 1,
**dadurch gekennzeichnet, dass** zumindest eines der Flächenbauteile (12, 14) in Form eines Hohlkörpers bereitgestellt wird.

3. Verfahren nach Anspruch 1 oder 2,
**dadurch gekennzeichnet, dass** das mindestens eine Flächenbauteil (12, 14) mittels Spritzgießen bereitgestellt wird.

4. Verfahren nach einem der Ansprüche 1 bis 3,
**dadurch gekennzeichnet, dass** das Stützbauteil (18) in Form eines Ringes bereitgestellt wird.

5. Verfahren nach einem der Ansprüche 1 bis 4,
**dadurch gekennzeichnet, dass** an dem Stützbauteil (18) ein Haltemittel (46) zum Rückhalten des mindestens einen Flächenbauteils (12, 14) an dem Stützbauteil (18) vorgesehen wird.

6. Verfahren nach einem der Ansprüche 1 bis 5,
**dadurch gekennzeichnet, dass** die Umspritzung (16) an das Stützbauteil (18) lösbar gekoppelt wird.

7. Verfahren nach einem der Ansprüche 1 bis 6,
**dadurch gekennzeichnet, dass** an dem Stützbauteil (18) mindestens ein Funktionselement (50) ausgebildet wird.

8. Verfahren nach einem der Ansprüche 1 bis 7,
**dadurch gekennzeichnet, dass** das Stützbauteil (18) aus einem Nicht-Kunststoffmaterial bereitgestellt wird.

9. Verfahren nach einem der Ansprüche 1 bis 8,
**dadurch gekennzeichnet, dass** das Stützbauteil (18) mit mindestens einem Abstandssteg (44) zum Anlegen des ersten und zweiten Flächenbauteils (12, 14) bereitgestellt wird.

10. Flächenkörper (10) aus Kunststoff, insbesondere in der Form eines Hohlkörpers, hergestellt mit einem Verfahren nach einem der Ansprüche 1 bis 9.
